(19) Europäisches Patentamt
European Patent Office
Office européen des brevets

(11) **EP 3 358 476 A1**

(12) **EUROPEAN PATENT APPLICATION**
published in accordance with Art. 153(4) EPC

(43) Date of publication:
08.08.2018 Bulletin 2018/32

(51) Int Cl.:
*G06F 17/30* (2006.01)    *G06Q 40/02* (2012.01)

(21) Application number: 17800988.2

(86) International application number:
PCT/CN2017/083632

(22) Date of filing: 09.05.2017

(87) International publication number:
WO 2017/215370 (21.12.2017 Gazette 2017/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 14.06.2016 CN 201610423436

(71) Applicant: Ping An Technology (Shenzhen) Co.,
Ltd.
Shenzhen, Guangdong 518000 (CN)

(72) Inventors:
• WU, Shuangshuang
  Shenzhen
  Guangdong 518000 (CN)
• XU, Liang
  Shenzhen
  Guangdong 518000 (CN)
• XIAO, Jing
  Shenzhen
  Guangdong 518000 (CN)

(74) Representative: Manitz Finsterwald Patentanwälte
PartmbB
Martin-Greif-Strasse 1
80336 München (DE)

(54) **METHOD AND APPARATUS FOR CONSTRUCTING DECISION MODEL, COMPUTER DEVICE AND STORAGE DEVICE**

(57) A method of constructing a decision model includes: obtaining a rule template data and extracting each variable object and each template sample from the rule template data; clustering and analyzing the variable objects to obtain a clustering result; matching the clustering result with each template sample according to the rule template data, and serving the matched clustering result as a first feature; calculating a black sample probability for each variable object and serving the black sample probability of each variable object as a second feature; and constructing the decision model according to the first feature and the second feature.

```
┌─────────────────────────────────────────┐  ⟋ S210
│ obtaining a rule template data and       │
│ extracting each variable object and each │
│ template sample in the rule template data│
└─────────────────────────────────────────┘
                    │
                    ▼
┌─────────────────────────────────────────┐  ⟋ S220
│ clustering and analyzing the variable    │
│ objects to obtain a clustering result    │
└─────────────────────────────────────────┘
                    │
                    ▼
┌─────────────────────────────────────────┐  ⟋ S230
│ matching the clustering result with each │
│ template sample according to the rule    │
│ template data, and serving the matched   │
│ clustering result as a first feature     │
└─────────────────────────────────────────┘
                    │
                    ▼
┌─────────────────────────────────────────┐  ⟋ S240
│ calculating a black sample probability   │
│ for each variable object and serving the │
│ black sample probability of each         │
│ variable object as a second feature      │
└─────────────────────────────────────────┘
                    │
                    ▼
┌─────────────────────────────────────────┐  ⟋ S250
│ constructing the decision model          │
│ according to the first feature and the   │
│ second feature                           │
└─────────────────────────────────────────┘
```

Fig. 2

**Description**

**CROSS REFERENCE TO RELATED APPLICATIONS**

The present application claims the benefit of Chinese Patent Application No. 2016104234360, filed on June 14, 2016, in the State Intellectual Property Office of China, entitled "METHOD AND DEVICE OF CONSTRUCTING DECISION MODEL", the entire content of which is incorporated herein in its entirety by reference.

**FIELD OF THE INVENTION**

The present application relates to the field of computer technology, and particularly to a method and a device of constructing a decision model, a computer device, and a storage apparatus.

**BACKGROUND OF THE INVENTION**

In the industries of insurance, medical, there are often many documents or project reviews, such as the initial review of insurance company underwriting, bank loan qualification review, medical insurance fraud case review, and these documents or project reviews mostly rely on manual work or are reviews based on complex rules. The manual review requires a lot of manpower and time, and complex rules usually involve in judging factors of multi-dimension and more complex classification level, therefore a modelling process is difficult and has a slow update thereof and poor flexibility, and the overmuch dimension and hierarchy involved in data will affect the performance of the model, and be not conducive to business decisions.

**SUMMARY OF THE INVENTION**

According to various embodiments of the present disclosure, a method and a device of constructing a decision model, a computer device and a storage apparatus are provided.

A method of constructing a decision model includes:

obtaining a rule template data and extracting each variable object and template sample from the rule template data;
clustering and analyzing the variable objects to obtain a clustering result;
matching the clustering result with each template sample according to the rule template data, and serving the matched clustering result as a first feature;
calculating a black sample probability for each variable object and serving the black sample probability of each variable object as a second feature; and
constructing the decision model according to the first feature and the second feature.

A device of constructing a decision model includes:

an extraction module configured to obtain a rule template data and extract each variable object and each template sample from the rule template data;
a cluster module configured to cluster and analyze the variable objects to obtain a clustering result;
a first feature module configured to match the clustering result with each template sample according to the rule template data, and serve the matched clustering result as a first feature;
a second feature module configured to calculate a black sample probability for each variable object and serve the black sample probability of each variable object as a second feature; and
a construction module configured to construct the decision model according to the first feature and the second feature.

A computer apparatus includes:

a processor; and a memory storing computer executable instructions that, when executed by the processor, cause the processor to perform operations comprising:
obtaining a rule template data and extracting each variable object and each template sample from the rule template data;
clustering and analyzing the variable objects to obtain a clustering result;
matching the clustering result with each template sample according to the rule template data, and serving the matched clustering result as a first feature;
calculating a black sample probability for each variable object and serving the black sample probability of each variable object as a second feature; and

constructing the decision model according to the first feature and the second feature.

One or more storage apparatus storing computer executable instructions that, when executed by the one or more processors, cause the one or more processors to perform the steps of:

obtaining a rule template data and extracting each variable object and each template sample from the rule template data;

clustering and analyzing the variable objects to obtain a clustering result;

matching the clustering result with each template sample according to the rule template data, and serving the matched clustering result as a first feature;

calculating a black sample probability for each variable object and serving the black sample probability of each variable object as a second feature; and

constructing the decision model according to the first feature and the second feature.

The details of one or more embodiments of the invention are set forth in the accompanying drawings and the description below. Other features, objects, and advantages of the invention will be apparent from the description and drawings, and from the claims.

**BRIEF DESCRIPTION OF THE DRAWINGS**

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.

Fig. 1 is a block diagram of a computer device in an embodiment;

Fig. 2 is a flow chart of a method of constructing a decision model in an embodiment;

Fig. 3 is a flow chart of a method of constructing a decision model in another embodiment;

Fig. 4 is a flow chart that how to construct a decision model in an embodiment;

Fig. 5 is a flow chart of clustering and analyzing the variable objects in an embodiment;

Fig. 6 is a block diagram of a device of constructing a decision model in an embodiment;

Fig. 7 is a block diagram of a device of constructing a decision model in another embodiment;

Fig. 8 is a block diagram of a construction module in another embodiment;

Fig. 9 is a block diagram of a cluster module in another embodiment.

**DETAILED DESCRIPTION OF THE EMBODIMENTS**

The above objects, features and advantages of the present invention will become more apparent by describing in detail embodiments thereof with reference to the accompanying drawings. It should be understood that these embodiments depicted herein are only used to illustrate the present invention and are not therefore to limit the present invention.

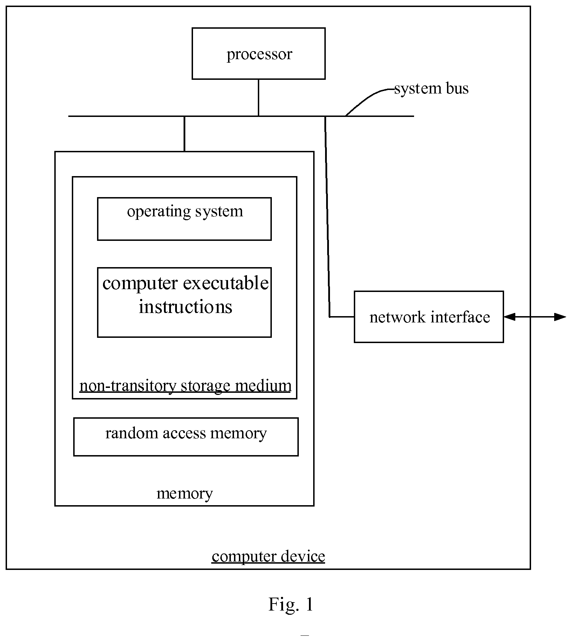

Fig. 1 is a block diagram of a computer device in an embodiment. Referring to Fig. 1, the computer device includes a processor, a memory and a network interface connected via a system bus. The processor is configured to provide calculation and control capabilities to support operation of the entire computer device. The memory is configured to store data, instruction codes and the like. In an embodiment, the memory may include a non-transitory storage medium and a RAM (Random Access Memory). The non-transitory storage medium stores an operating system and computer executable instructions. The computer executable instructions may be configured to implement the method of constructing a decision model applied to the computer device provided in the embodiment. The RAM provides a running environment to the operating system and the computer executable instructions in the non-transitory storage medium. The network interface is configured to perform a network communication with other computer devices, such as to obtain a rule template data and the like. The computer device may be a terminal such as a mobile phone, a tablet computer and a PC (personal computer), a server or the like. Those skilled in the art can understand that the structure shown in Fig. 1 is only a block diagram of the partial structure associated with the present solution and does not limit the computer device to which the present solution is applied, and the particular computer device may include more or fewer parts shown in the drawing, or combine certain parts, or have a different arrangement of parts.

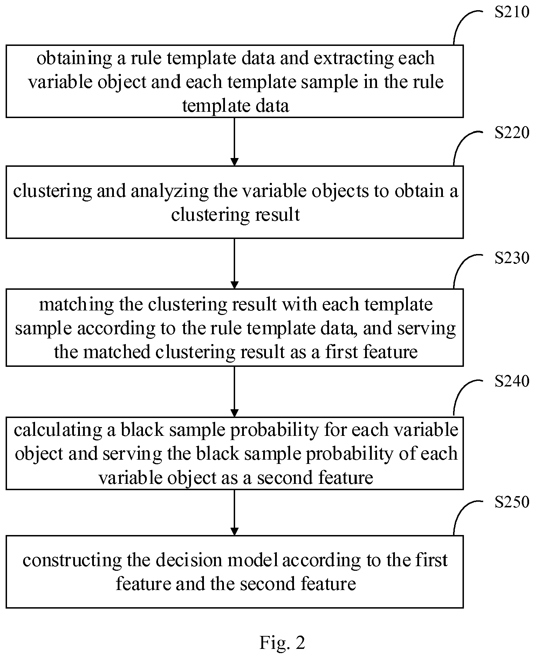

Referring to Fig. 2, in an embodiment, a method of constructing a decision model is provided, which can be applied to the computer device shown in Fig. 1. The method includes the following steps:

In step S210, a rule template data is obtained, and each variable object and each template sample from the rule template data are extracted.

The rule template refers to a set of criterion to determine the review results. A review for a document or an item may correspond to one or more rule templates, for example, a review for the lender credit, which may include rule templates such as "to which branches the lender has applied for loans", "for which institutions the lender has bad records" and the like. Each different rule template has its corresponding rule template data. Among them, the rule template data can include each variable object, each template sample, and the matching relationship between the variable object and the template sample. The variable object is a variable of a qualitative type, and each variable object corresponds to a different class in the rule template, for example, the rule template is " to which branches the lender has applied for loans", and the corresponding rule template data can include "User 1 has applied for a loan to Branch A", "User 2 has applied for a loan to Branch B", "User 3 has applied for a loan to Branch C" and so on, wherein each branch such as Branch A, Branch B, Branch C and the like is a variable object; the user such as User 1, User 2, User 3 and the like is a template sample.

In step S220, the variable objects are clustered and analyzed to obtain a clustering result.

The computer device can extract multidimensional data of each variable object, cluster and analyze the variable objects according to the multidimensional data. The multidimensional data refers to data related to each dimension of the variable object, for example, the variable object is each branch, the multidimensional data may include the total amount of lenders, the total amount of loans, the average loan period, the branch scale, the geographical location of each branch and the like. Clustering and analyzing refers to an analysis process that a set of physical or abstract objects is grouped into a plurality of classes each of which is composed by similar objects. By clustering and analyzing the variable objects, similar variable objects can be clustered, which can reduce the level of the variable object. For example, the variable objects include Branch A, Branch B, Branch C, Branch D and so on; the variable objects are clustered and analyzed; Branch A is similar to Branch B, and they are grouped into Group A; Branch C is similar to Branch D, and they are grouped into Group B; and the like. The level of the variable object is reduced from the original level of each branch to the level of each group. After the variable objects are clustered and analyzed, the clustering result composed by each cluster can be obtained.

In step S230, the clustering result is matched with each template sample according to the rule template data, and the matched clustering result serves as a first feature.

After the variable objects are clustered and analyzed by the computer device and then the clustering result is obtained, the clustering result can be matched with each template sample according to the matching relationship between the variable objects and the template samples from the rule template data. For example, the rule template is "for which related institutions the lender has bad records"; the rule template data includes "User 1 has bad records in FK institution", "User 2 has bad records in CE institution", "User 3 has bad records in KD institution", and so on; the variable objects "FK institution", "CE institution", "KD institution" and the like are clustered and analyzed to obtain clusters which are named as Group A, Group B, Group C and the like respectively; and the clustering result is matched with the template samples " User 1", "User 2", "User 3" and the like. Referring to the following tables, Table 1 shows the matching relationship between the variable objects and the template samples from the rule template data; Table 2 shows the matching relationship between the clustering result and each template sample; number "I", without limitation, can be used to indicate the matching relationship between the variable objects and the template samples or the clustering result.

Table 1

| user | FK | CE | KD | …… |
|---|---|---|---|---|
| User 1 | 1 | 0 | 0 | …… |
| User 2 | 0 | 1 | 0 | …… |
| User 3 | 0 | 1 | 1 | …… |
| …… | …… | …… | …… | …… |

Table 2

| cluster<br>user | Group A | Group B | Group C | …… |
|---|---|---|---|---|
| User 1 | 1 | 0 | 0 | …… |
| User 2 | 1 | 0 | 0 | …… |
| User 3 | 0 | 1 | 0 | …… |
| …… | …… | …… | …… | …… |

By clustering and analyzing the variable objects, the levels of the variable objects can be reduced significantly, which can facilitate modelling of the decision model.

In step S240, a black sample probability is calculated for each variable object and the black sample probability of each variable object serves as a second feature.

In an embodiment, the output of the decision model is usually a black sample or a white sample; the black sample refers to a sample that does not pass the review; and the white sample refers to a sample that passes the review. For example, when the decision model is configured to review qualification of bank loan, the black sample refers to the user that does not pass the loan qualification review; and the white sample refers to the user that passes the loan qualification review. The computer device calculates the black sample probability of each variable object respectively, that is, for each variable object from the rule template data, the result type of the template sample is what the probability of the black samples is. For example, when the rule template is "for which related institutions the lender has bad records", the probability that the user having bad records for KD institution is a black sample finally can be calculated and so on. The calculation formula of the black sample probability for the variable objects can be: the black sample probability = the number of black samples of the variable object/the total number of template samples for the variable object. The computer device can use the calculated black sample probability of each variable object as a second feature in the form of a continuous variable. In other embodiments, the WOE (weight-of-evidence) value of each variable object can also be calculated respectively, and the formula is WOE = ln (the ratio of the number of black samples of the variable object to the total number of black samples / the ratio of the number of white samples of the variable object to the total number of white samples); the higher the WOE value, the lower the probability that the template samples of the variable object are black samples.

In step S250, the decision model is constructed according to the first feature and the second feature.

Currently, the manner of constructing the decision model is to perform the modelling operation by inputting all rule template data; there are many more rule template data; and the levels thereof are complicated, which will not facilitate the modelling operation and influence performance of the model negatively. By serving the matched clustering result as the first feature, the computer device can serve the black sample probability of each variable object as the second feature, which replaces the input rule template data to construct the decision model, so as to not only reduce the level of data, but also keep impact of each variable object on the decision result. Therefore, the decision result is more accurate. The decision model can include the machine learning model such as the decision tree, GBDT (Gradient Boosting Decision Tree) model, LDA (Linear Discriminant Analysis) model. When constructing the review decision model for a certain document or a certain project, it may correspond to one or more rule templates; and then the first feature and the second feature corresponding to each rule template are obtained to construct the decision model instead of the originally input rule template data. When there are less variable objects in certain rule templates, the rule template data can be input directly to construct the model.

For the above method of constructing the decision model, each variable object and each template sample are extracted from the rule template data; the variable objects are clustered and analyzed to obtain the clustering result; the clustering result is matched with each template sample according to the rule template data; the matched clustering result serves as the first feature; the black sample probability of each variable object is calculated respectively; the black sample probability of each variable object serves as the second feature, and the decision model is constructed according to the first feature and the second feature. Dimensions and levels of data can be reduced by clustering and analyzing the variable objects, which facilitates constructing the decision model and reducing negative influence on performance of the model. Further, performance of the decision model constructed according to the first feature and the second feature is more accurate and facilitates quickly processing the business of which complex rules need to be reviewed, which improves the decision efficiency.

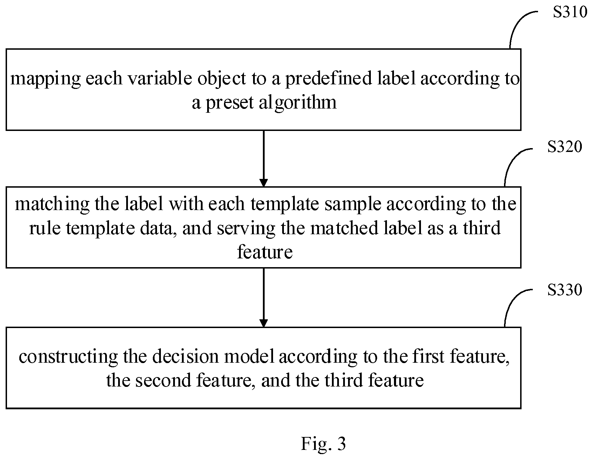

Referring to Fig. 3, the above method of constructing the decision model further includes:

In step S310, each variable object is mapped to a predefined label according to a preset algorithm.

The label is configured to indicate the corresponding element after mapping each variable object. Each label can be predefined and the variable objects can be mapped to the predefined labels. The preset algorithm may include, but not limited to, a hash equation such as MD5 (Message-Digest Algorithm 5), SHA (Secure Hash Algorithm, security hash algorithm) and the like. In an embodiment, the computer device may map each variable object to a predefined label according to the preset algorithm. For example, the variable objects are Branch A, Branch B, Branch C and the like; Branch A and Branch C are mapped to Label A by using the SHA algorithm; Branch B is mapped to Label K; the number of labels can be set according to the actual situation; a label will not correspond to many variable objects, which not only can reduce dimensions and levels of data, but also can retain a part of the original information.

In step S320, the label is matched with each template sample according to the rule template data, and the matched label serves as a third feature.

The computer device can match the label with each template sample according to the matching relationship between the variable object and the template sample from the rule template data, and serve the matched label as the third feature to perform the modelling operation.

In step S330, the decision model is constructed according to the first feature, the second feature, and the third feature.

The computer device can serve the matched clustering result as the first feature, the black sample probability of each variable object as the second feature, and the matched label as the third feature; and replace all input rule template data with the first feature, the second feature and the third feature to construct the decision model, which not only reduces the level of data, but also keeps impact of each variable object on the decision result, so that the decision result is more accurate.

In the embodiment, the decision model is constructed according to the first feature, the second feature and the third feature. The variable objects are clustered, analyzed and mapped to the predefined label, which can reduce dimensions and levels of data, facilitate constructing the decision model, decrease negative influence on performance of the model, make performance of the model more accurate, facilitate quickly processing the business of which complex rules need to be reviewed, and improve the decision efficiency.

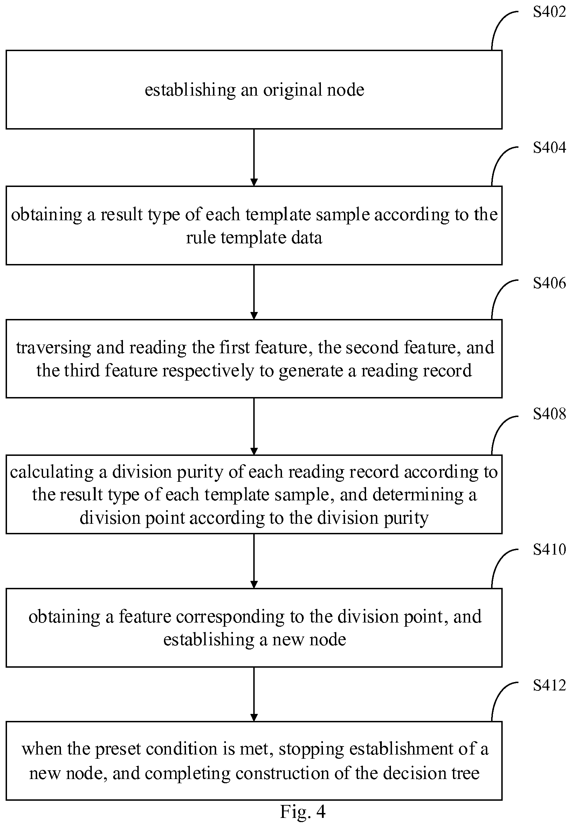

Referring to Fig. 4, in an embodiment, the step S330 of constructing the decision model according to the first feature, the second feature, and the third feature includes the following step:

In step S402, an original node is established.

In an embodiment, the decision model may be a decision tree model, and the original node of the decision tree can be established firstly.

In step S404, the result type of each template sample is obtained according to the rule template data.

The result type of the template sample refers to the final result of the template sample, such as a black sample, a white sample and the like. The result type of each template sample can be obtained from the rule template data.

In step S406, the first feature, the second feature, and the third feature are traversed and read respectively to generate a reading record.

The computer device traverses and reads the first feature, the second feature, and the third feature, respectively, to generate a reading record, that is to say, each possible decision tree branch is traversed. For example, the first feature is traversed and read, and the reading records, such as "User 1 has bad loan records for Group A", "User 2 has bad loan records for Group A" and the like, are generated; the second feature is traversed and read, and the reading records, such as "the black sample probability of FK institution is 20%", "the black sample probability of CE institution is 15%" and the like. Each reading record may be a branch of the decision tree.

In step S408, a division purity of each reading record is calculated according to the result type of each template sample, and a division point is determined according to the division purity.

The computer device can determine the division purity of each reading record by calculating Gini impurity, entropy, information gain and the like, wherein Gini impurity refers to an expected error rate that a certain result from a set is randomly applied to a data item in the set; entropy is used to measure the degree of confusion in the system, and information gain is used to measure the capability that a reading record distinguishes the template samples. Calculation of the division purity of each reading record can be explained by the fact that if the template samples are divided according to the reading record, the smaller the difference between the predicted result type and the true result type, the larger the division purity, the purer the reading record. For example, the calculation formula of Gini impurity may be:

$$Gini = 1 - \sum_{i=1}^{m} P(i)^2 ,$$

then the division purity=1- Gini impurity, wherein $i \in \{1, 2,......, m\}$ refers to m final results of the decision model, $P(i)$ refers to a ratio that the result type is the final result when the template sample uses the reading record as a judgement condition.

The computer device can determine the optimal division point according to size of the division purity of each reading record. The reading condition of a larger division purity serves as a branch preferably, and then the original node is divided.

In step S410, a feature corresponding to the division point is obtained, and a new node is established.

The computer device can obtain the feature corresponding to the division point and establish a new node. For example, the division purity can be calculated for each reading record, and a reading record with the maximum division purity "User 1 has bad loans for Group A" can be obtained, the original node can be divided into two branches, wherein one branch indicates "there are bad loan records for Group A"; the other branch indicates "there are not bad loan records for Group A"; the corresponding node is generated; and a next division point is searched for the new node to perform the division operation until all reading records are added to the decision tree.

In step S412, when the preset condition is met, establishment of a new node is stopped, and construction of the decision tree is complete.

The preset condition can be "all reading records have been added into the decision tree as nodes", and the node data of the decision tree can also be preset. When the node data of the decision tree reaches the set amount of node data, without limitation, establishment of a new node is stopped. After the decision tree model is constructed, the computer device can trim the decision tree and cut off the nodes corresponding to the reading records of division purities less than the preset purity value, so that each branch of the decision tree has a higher division purity.

In the embodiment, the first feature, the second feature and the third feature are traversed and read respectively to generate a reading record, and the division purity of each reading record is calculated according to the result type of each template sample. The division point is determined according to size of the division purity to construct the decision model, which can make performance of the decision model more accurate, facilitate quickly processing the business of which complex rules need to be reviewed and improve the decision efficiency.

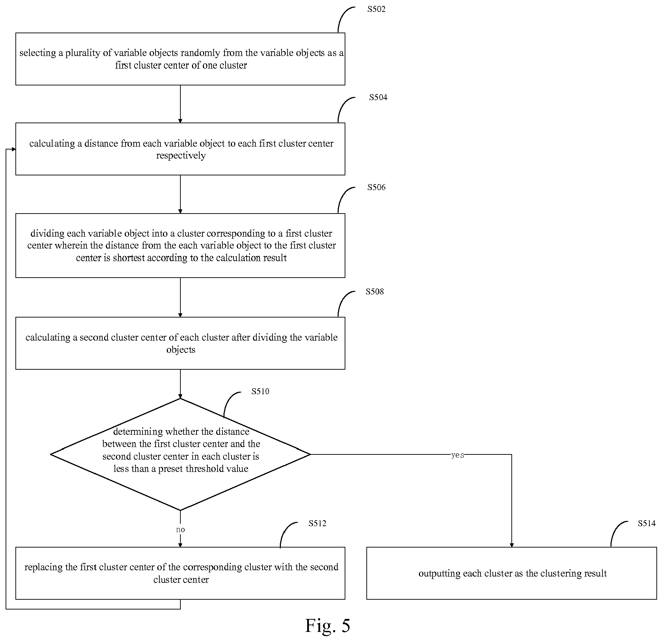

Referring to Fig. 5, in an embodiment, the step S220 of clustering and analyzing the variable objects to obtain the clustering result includes:

In step S502, a plurality of variable objects are selected randomly from the variable objects as a first cluster center of one cluster.

The computer device can select a plurality of variable objects randomly from all variable objects, serve each selected variable object as the first cluster center of each cluster, and name each cluster, respectively. Each first cluster center corresponds to a cluster, that is to say, the number of clusters equals to the number of selected variable objects.

In step S504, a distance from each variable object to each first cluster center is calculated respectively.

In an embodiment, the step S504 of calculating the distance from each variable object to each first cluster center respectively includes (a) and (b):

(a) a multidimensional data of each variable object is obtained according to the rule template data.
The computer device can obtain the multidimensional data of each variable object from the rule template data. The multidimensional data refers to data related to each dimension of the variable object. For example, if the variable object is "each branch ", the multidimensional data may include the total amount of lender for each branch, the total loan amount, the average loan period, the branch scale, the geographical location and so on.
(b) a distance from each variable object to each first cluster center is calculated according to the multidimensional data of each variable object respectively.

According to the obtained multidimensional data of each variable object, the computer device can calculate the distance between the two variable objects and the distance from each variable object to each first cluster center by using the formulas such as Euclidean distance and cosine similarity. For example, if there are 4 clusters each of which corresponds to four first cluster centers respectively, then it needs to calculate the distance from each variable object to the first one of first cluster centers, the distance from each variable object to the second one of first cluster centers and so on.

In step S506, each variable object is divided into a cluster corresponding to a first cluster center wherein the distance from the each variable object to the first cluster center is shortest according to the calculation result.

After calculating the distance from each variable object to each first cluster center, the computer device can divide the variable object into the cluster corresponding to a first cluster center wherein the distance from the each variable object to the first cluster center is shortest. In other embodiments, the calculated distance may also be compared to a preset distance threshold, and when the distance between the variable object and a certain first cluster center is less than the distance threshold, the variable object is divided into the cluster corresponding to the first cluster center.

In step S508, a second cluster center of each cluster is calculated respectively after dividing the variable objects.

After the division operation is complete, each cluster can include one or more variable objects, and the computer device can recalculate the second cluster center of each cluster using the mean formula and reselect the center of each cluster.

In step S510, whether the distance between the first cluster center and the second cluster center in each cluster is less than a preset threshold value is determined.

The computer device calculates the distance between the first cluster center and the second cluster center of each cluster and determines whether the distance is less than the preset threshold; if the distance between the first cluster center and the second cluster center of all clusters is less than the preset threshold, it indicates that each cluster tends to be stable and no longer changes, each cluster can be output as the clustering result; if the distance between the first cluster center and the second cluster center of the cluster is not less than the preset threshold, it is necessary to re-divide the variable objects of each cluster.

In step S512, the first cluster center of the corresponding cluster is replaced with the second cluster center, and it continues to perform step S504.

If the distance between the first cluster center and the second cluster center of the cluster is not less than the preset threshold, the first cluster center is replaced with the second cluster center of the cluster, and the step of calculating the distance from each variable object to each first cluster center respectively is re-performed; the steps S404 to S412 are repeated until each cluster tends to be stable and no longer changes.

In step S514, each cluster is output as the clustering result.

In the embodiment, the variable objects are clustered and analyzed; and similar variable objects are merged in a cluster, which can reduce the level of data and facilitating constructing the decision model.

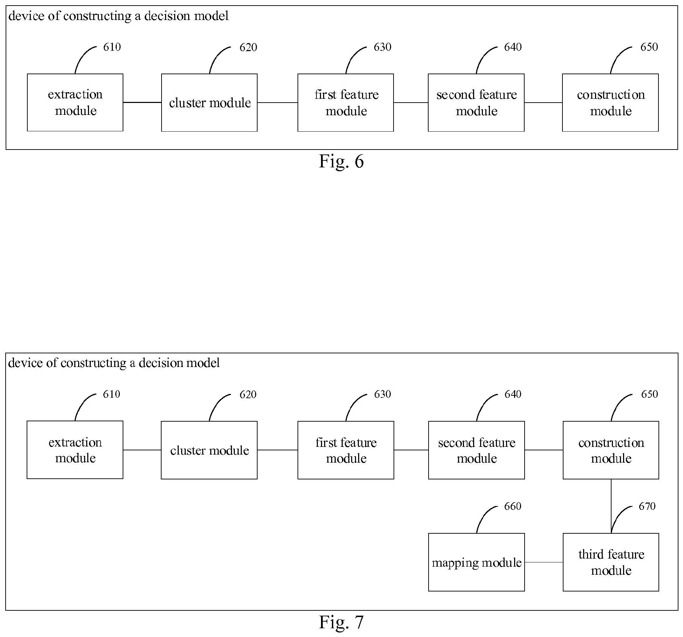

Referring to Fig. 6, in an embodiment, a device of constructing a decision model is provided. The device includes an extraction module 610, a cluster module 620, a first feature module 630, a second feature module 640 and a construction module 650.

The extraction module 610 is configured to obtain a rule template data and extract each variable object and each template sample from the rule template data.

The rule template refers to a set of criterion to determine the review results. A review for a document or an item may correspond to one or more rule templates, for example, a review for the lender credit, which may include rule templates such as "to which branches the lender has applied for loans", "for which institutions the lender has bad records" and the like. Each different rule template has its corresponding rule template data. Among them, the rule template data can include each variable object, each template sample, and the matching relationship between the variable object and the template sample. The variable object is a variable of a qualitative type, and each variable object corresponds to a different class in the rule template, for example, the rule template is " to which branches the lender has applied for loans", and the corresponding rule template data can include "User 1 has applied for a loan to Branch A", "User 2 has applied for a loan to Branch B", "User 3 has applied for a loan to Branch C" and so on, wherein each branch such as Branch A, Branch B, Branch C and the like is a variable object; the user such as User 1, User 2, User 3 and the like is a template sample.

The cluster module 620 is configured to cluster and analyze the variable objects to obtain a clustering result.

The computer device can extract multidimensional data of each variable object, cluster and analyze the variable objects according to the multidimensional data. The multidimensional data refers to data related to each dimension of the variable object, for example, the variable object is each branch, the multidimensional data may include the total amount of lenders, the total amount of loans, the average loan period, the branch scale, the geographical location of each branch and the like. Clustering analyzing refers to an analysis process that a set of physical or abstract objects is grouped into a plurality of classes each of which is composed by similar objects. By clustering and analyzing the variable objects, similar variable objects can be clustered and analyzed, which can reduce the level of the variable object. For example, the variable objects include Branch A, Branch B, Branch C, Branch D and so on; the variable objects are clustered and analyzed; Branch A is similar to Branch B, and they are grouped into Group A; Branch C is similar to Branch D, and they are grouped into Group B; and the like. The level of the variable object is reduced from the original level of each branch to the level of each group. After the variable objects are clustered and analyzed, the clustering result composed by each cluster can be obtained.

The first feature module 630 is configured to match the clustering result with each template sample according to the rule template data, and serve the matched clustering result as a first feature.

After the variable objects are clustered and analyzed by the computer device and then the clustering result is obtained, the clustering result can be matched with each template sample according to the matching relationship between the variable objects and the template samples from the rule template data. For example, the rule template is "for which related institutions the lender has bad records"; the rule template data includes "User 1 has bad records in FK institution", "User 2 has bad records in CE institution", "User 3 has bad records in KD institution", and so on; the variable objects "FK institution", "CE institution", "KD institution" and the like are clustered and analyzed to obtain clusters which are named as Group A, Group B, Group C and the like respectively; and the clustering result is matched with the template samples "User 1", "User 2", "User 3" and the like. Referring to the following tables, Table 1 shows the matching relationship between the variable objects and the template samples from the rule template data; Table 2 shows the matching relationship between the clustering result and each template sample; number "1", without limitation, can be used to indicate the matching relationship between the variable objects and the template samples or the clustering result. The variable objects are clustered and analyzed, which reduces levels of the variable objects significantly and facilitate the modelling operation.

The second feature module 640 is configured to calculate a black sample probability for each variable object and serve the black sample probability of each variable object as a second feature.

The output of the decision model is usually a black sample or a white sample; the black sample refers to a sample that does not pass the review; and the white sample refers to a sample that passes the review. For example, when the decision model is configured to review qualification of bank loan, the black sample refers to the user that does not pass the loan qualification review; and the white sample refers to the user that passes the loan qualification review. The black sample probability of each variable object is calculated respectively, that is, for each variable object from the rule template data, the result type of the template sample is what the probability of the black samples is. For example, when the rule template is "for which related institutions the lender has bad records", the probability that the user having bad records for KD institution is a black sample finally can be calculated and so on. The calculation formula of the black sample probability for the variable objects can be: the black sample probability = the number of black samples of the variable object/the total number of template samples for the variable object. The computer device can use the calculated black sample probability of each variable object as a second feature in the form of a continuous variable. In other embodiments, the WOE (weight-of-evidence) value of each variable object can also be calculated respectively, and the formula is WOE = In (the ratio of the number of black samples of the variable object to the total number of black samples / the ratio of the number of white samples of the variable object to the total number of white samples); the higher the WOE value, the lower the probability that the template samples of the variable object are black samples.

The construction module 650 is configured to construct the decision model by the first feature and the second feature.

Currently, the manner of constructing the decision model is to perform the modelling operation by inputting all rule template data; there are many more rule template data; and the levels thereof are complicated, which will not facilitate the modelling operation and influence performance of the model negatively. By serving the matched clustering result as the first feature, the black sample probability of each variable object serve as the second feature, which replaces the input rule template data to construct the decision model, so as to not only reduce the level of data, but also keep impact of each variable object on the decision result. Therefore, the decision result is more accurate. The decision model can include the machine learning model such as the decision tree, GBDT tree model, LDA model. When constructing the review decision model for a certain document or a certain project, it may correspond to one or more rule templates; and then the first feature and the second feature corresponding to each rule template are obtained to construct the decision model instead of the originally input rule template data. When there are less variable objects in certain rule templates, the rule template data can be input directly to construct the model.

For the above device of constructing the decision model, each variable object and each template sample are extracted from the rule template data; the variable objects are clustered and analyzed to obtain the clustering result; the clustering result is matched with each template sample according to the rule template data; the matched clustering result serves as the first feature; the black sample probability of each variable object is calculated respectively; the black sample probability of each variable object serves as the second feature, and the decision model is constructed according to the first feature and the second feature. Dimensions and levels of data can be reduced by clustering and analyzing the variable objects, which facilitates constructing the decision model and reducing negative influence on performance of the model. Further, performance of the decision model constructed according to the first feature and the second feature is more accurate and facilitates quickly processing the business of which complex rules need to be reviewed, which improves the decision efficiency.

Referring to Fig. 7, in an embodiment, in addition to the extraction module 610, the cluster module 620, the first feature module 630, the second feature module 640 and the construction module 650, the above device of constructing the decision model further includes a mapping module 660 and a third feature module 670.

the mapping module 660 is configured to map each variable object to a predefined label according to a preset algorithm.

The label is configured to indicate the corresponding element after mapping each variable object; each label can be predefined and the variable objects can be mapped to the predefined labels. The preset algorithm may include, but not limited to, a hash equation such as MD5, SHA and the like. In an embodiment, the computer device may map each variable object to a predefined label according to the preset algorithm. For example, the variable objects are Branch A, Branch B, Branch C and the like; Branch A and Branch C are mapped to Label A by using the SHA algorithm; Branch B is mapped to Label K; the number of labels can be set according to the actual situation; a label will not correspond to too many variable objects, which not only can reduce dimensions and levels of data, but also can retain a part of the original information.

The third feature module 570 is configured to match the label with each template sample according to the rule template data, and serve the matched label as a third feature.

The computer device can match the label with each template sample according to the matching relationship between the variable object and the template sample from the rule template data, and serve the matched label as the third feature to perform the modelling operation.

The construction module 650 is further configured to construct the decision model according to the first feature, the second feature, and the third feature.

The computer device can serve the matched clustering result as the first feature, the black sample probability of each variable object as the second feature, and the matched label as the third feature; and replace all input rule template data with the first feature, the second feature and the third feature to construct the decision model, which not only reduces the level of data, but also keeps impact of each variable object on the decision result, so that the decision result is more accurate.

In the embodiment, the decision model is constructed according to the first feature, the second feature and the third feature. The variable objects are clustered, analyzed and mapped to the predefined label, which can reduce dimensions and levels of data, facilitate constructing the decision model, decrease negative influence on performance of the model, make performance of the model more accurate, facilitate quickly processing the business of which complex rules need to be reviewed, and improve the decision efficiency.

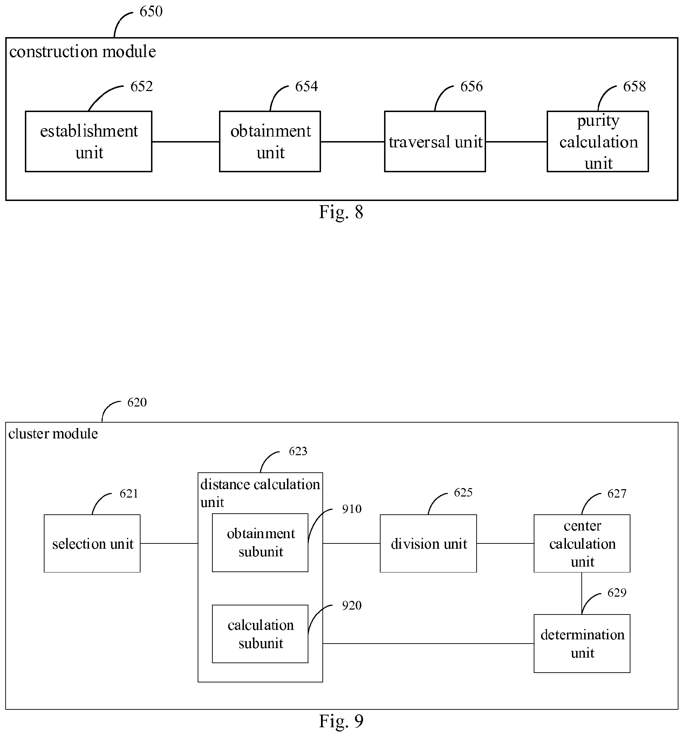

Referring to Fig. 8, in an embodiment, the construction module 650 includes an establishment unit 652, an obtainment unit 654, a traversal unit 656 and a purity calculation unit 658.

The establishment unit 652 is configured to establish an original node.

In an embodiment, the decision model may be a decision tree model, and the original node of the decision tree can be established firstly.

The obtainment unit 654 is configured to obtain a result type of each template sample according to the rule template data.

The result type of the template sample refers to the final result of the template sample, such as a black sample, a white sample and the like. The result type of each template sample can be obtained from the rule template data.

The traversal unit 656 is configured to traverse and read the first feature, the second feature, and the third feature respectively to generate a reading record.

The computer device traverses and reads the first feature, the second feature, and the third feature, respectively, to generate a reading record, that is to say, each possible decision tree branch is traversed. For example, the first feature is traversed and read, and the reading records, such as "User 1 has bad loan records for Group A", "User 2 has bad loan records for Group A" and the like, are generated; the second feature is traversed and read, and the reading records, such as "the black sample probability of FK institution is 20%", "the black sample probability of CE institution is 15%" and the like. Each reading record may be a branch of the decision tree.

The purity calculation unit 658 is configured to calculate a division purity of each reading record according to the result type of each template sample, and determine a division point according to the division purity.

The computer device can determine the division purity of each reading record by calculating Gini impurity, entropy, information gain and the like, wherein Gini impurity refers to an expected error rate that a certain result from a set is randomly applied to a data item in the set; entropy is used to measure the degree of confusion in the system, and information gain is used to measure the capability that a reading record distinguishes the template samples. Calculation of the division purity of each reading record can be explained by the fact that if the template samples are divided according to the reading record, the smaller the difference between the predicted result type and the true result type, the larger the division purity, the purer the reading record. For example, the calculation formula of Gini impurity may be:

$$Gini = 1 - \sum_{i=1}^{m} P(i)^2 \ ,$$

then the division purity=1- Gini impurity, wherein i∈ {1, 2,......, m} refers to m final results of the decision model, *P*(*i*) refers to a ratio that the result type is the final result when the template sample uses the reading record as a judgement condition.

The computer device can determine the optimal division point according to size of the division purity of each reading record. The reading condition of a larger division purity serves as a branch preferably, and then the original node is divided.

The establishment unit 652 is further configured to obtain a feature corresponding to the division point, and establish a new node.

The computer device can obtain the feature corresponding to the division point and establish a new node. For example, the division purity can be calculated for each reading record, and a reading record with the maximum division purity "User 1 has bad loans for Group A" can be obtained, the original node can be divided into two branches, wherein one branch indicates "there are bad loan records for Group A"; the other branch indicates "there are not bad loan records for Group A"; the corresponding node is generated; and a next division point is searched for the new node to perform the division operation until all reading records are added to the decision tree.

The establishment unit 652 is further configured to stop establishing a new node; and construction of the decision tree is complete.

The preset condition can be "all reading records have been added into the decision tree as nodes", and the node data of the decision tree can also be preset. When the node data of the decision tree reaches the set amount of node data, without limitation, establishment of a new node is stopped. After the decision tree model is constructed, the computer device can trim the decision tree and cut off the nodes corresponding to the reading records of division purities less than the preset purity value, so that each branch of the decision tree has a higher division purity.

In the embodiment, the first feature, the second feature and the third feature are traversed and read respectively to generate a reading record, and the division purity of each reading record is calculated according to the result type of each template sample. The division point is determined according to size of the division purity to construct the decision model, which can make performance of the decision model more accurate, facilitate quickly processing the business of which complex rules need to be reviewed and improve the decision efficiency.

Referring to Fig. 9, in an embodiment, the cluster module 620 includes a selection unit 621, a distance calculation unit 623, a division unit 625, a center calculation unit 627 and a determination unit 629.

The selection unit 621 is configured to select a plurality of variable objects randomly from the variable objects as a first cluster center of one cluster, wherein each first cluster center corresponding to one of the cluster.

The computer device can select a plurality of variable objects randomly from all variable objects, serve each selected variable object as the first cluster center of each cluster, and name each cluster, respectively. Each first cluster center corresponds to a cluster, that is to say, the number of clusters equals to the number of selected variable objects.

The distance calculation unit 623 is configured to calculate a distance from each variable object to each first cluster center respectively.

The distance calculation unit 623 includes an obtainment subunit 910 and a calculation subunit 920.

The obtainment subunit 910 is configured to obtain a multidimensional data of each variable object according to the rule template data.

The computer device can obtain the multidimensional data of each variable object from the rule template data. The multidimensional data refers to data related to each dimension of the variable object. For example, if the variable object is "each branch ", the multidimensional data may include the total amount of lender for each branch, the total loan amount, the average loan period, the branch scale, the geographical location and so on.

The calculation subunit 920 is configured to calculate a distance from each variable object to each first cluster center according to the multidimensional data of each variable object respectively.

According to the obtained multidimensional data of each variable object, the computer device can calculate the distance between the two variable objects and the distance from each variable object to each first cluster center by using the formulas such as Euclidean distance and cosine similarity. For example, if there are 4 clusters each of which corresponds to four first cluster centers respectively, then it needs to calculate the distance from each variable object to the first one of first cluster centers, the distance from each variable object to the second one of first cluster centers and so on.

The division unit 625 is configured to divide each variable object into a cluster corresponding to a first cluster center wherein the distance from the each variable object to the first cluster center is shortest according to the calculation result.

After calculating the distance from each variable object to each first cluster center, the computer device can divide the variable object into the cluster corresponding to a first cluster center wherein the distance from the each variable object to the first cluster center is shortest. In other embodiments, the calculated distance may also be compared to a preset distance threshold, and when the distance between the variable object and a certain first cluster center is less than the distance threshold, the variable object is divided into the cluster corresponding to the first cluster center.

The center calculation unit 627 is configured to calculate a second cluster center of each cluster respectively after dividing the variable objects.

After the division operation is complete, each cluster can include one or more variable objects, and the computer device can recalculate the second cluster center of each cluster using the mean formula and reselect the center of each cluster.

The determination unit 629 is configured to determine whether the distance between the first cluster center and the second cluster center in each cluster is less than a preset threshold value; and if yes, each cluster is output as the clustering result; or else, the first cluster center of the corresponding cluster is replaced with the second cluster center, and the distance calculation unit 523 continues to calculate the distance from each variable object to each first cluster center respectively.

The computer device calculates the distance between the first cluster center and the second cluster center of each cluster and determines whether the distance is less than the preset threshold; if the distance between the first cluster center and the second cluster center of all clusters is less than the preset threshold, it indicates that each cluster tends to be stable and no longer changes, each cluster can be output as the clustering result; if the distance between the first cluster center and the second cluster center of the cluster is not less than the preset threshold, it is necessary to re-divide the variable objects of each cluster. If the distance between the first cluster center and the second cluster center of the cluster is not less than the preset threshold, the first cluster center is replaced with the second cluster center of the cluster, and the step of calculating the distance from each variable object to each first cluster center respectively is re-performed; the steps S404 to S412 are repeated until each cluster tends to be stable and no longer changes.

In the embodiment, the variable objects are clustered and analyzed; and similar variable objects are merged in a cluster, which can reduce the level of data and facilitating constructing the decision model.

Each module in the above device of constructing a decision model may be implemented in whole or in part by software, hardware, and combinations thereof. For example, in implementation of hardware, the cluster module 620 can cluster and analyzed the variable objects by the processor of the computer device; wherein, the processor may be a central processing unit (CPU), a microprocessor, a single chip, or the like; the extraction module 610 can obtain a rule template data by the network interface of the computer device; wherein the network interface can be an Ethernet card or a wireless network card and the like. Each module described above may be embedded in or independent from the processor in the server in the form of the hardware, or may be stored in the RAM in the server in the form of the software, so that the processor calls the operations performed by each module described above.

It can be understood by those skilled in the art that all or a part of the processes in the method of the embodiments described above may be accomplished by means of the associated hardwares instructed by a computer program, and the computer program may be stored in a computer readable storage apparatus. When the program is executed, an embodiment flow of each method described above may be included. The storage apparatus may be a magnetic disk, an optical disk, a read only memory (ROM), a random access memory (RAM), or the like.

Various features of the above embodiments can be combined in any manner. For simplicity of description, all possible combinations of various features in the above embodiments are not described. However, these combinations of these features should be regarded in the scope described in the specification as long as they do not contradict with each other.

Although the invention is illustrated and described herein with reference to specific embodiments, the invention is not intended to be limited to the details shown. Rather, various modifications may be made in the details within the scope and range of equivalents of the claims and without departing from the invention.

**Claims**

1. A method of constructing a decision model, comprising:

   obtaining a rule template data and extracting each variable object and template sample from the rule template data;
   clustering and analyzing the variable objects to obtain a clustering result;
   matching the clustering result with each template sample according to the rule template data, and serving the matched clustering result as a first feature;
   calculating a black sample probability for each variable object and serving the black sample probability of each variable object as a second feature; and
   constructing the decision model according to the first feature and the second feature.

2. The method of claim 1, wherein after calculating the black sample probability for each variable object and serving the black sample probability of each variable object as the second feature, the method further comprises:

   mapping each variable object to a predefined label according to a preset algorithm; and
   matching the label with each template sample according to the rule template data, and serving the matched label as a third feature;
   wherein the constructing the decision model according to the first feature and the second feature comprises:
   constructing the decision model according to the first feature, the second feature, and the third feature.

3. The method of claim 2, wherein the constructing the decision model according to the first feature, the second feature, and the third feature comprises:

   establishing an original node;
   obtaining a result type of each template sample according to the rule template data;

traversing and reading the first feature, the second feature, and the third feature respectively to generate a reading record;

calculating a division purity of each reading record according to the result type of each template sample, and determining a division point according to the division purity; and

obtaining a feature corresponding to the division point, and establishing a new node.

4. The method of claim 1, wherein the clustering and analyzing the variable objects to obtain the clustering result comprises:

selecting a plurality of variable objects randomly from the variable objects as a first cluster center of one cluster, each first cluster center corresponding to one of the cluster;

calculating a distance from each variable object to each first cluster center, respectively;

dividing each variable object according to the calculation result, and dividing each variable object into a cluster corresponding to a first cluster center wherein the distance from the each variable object to the first cluster center is shortest;

calculating a second cluster center of each cluster respectively after dividing the variable objects; and

determining whether the distance between the first cluster center and the second cluster center in each cluster is less than a preset threshold value; and if yes, outputting each cluster as the clustering result; or else, replacing the first cluster center of the corresponding cluster with the second cluster center, and continuing to calculate the distance from each variable object to each first cluster center, respectively.

5. The method of claim 4, wherein the calculating the distance from each variable object to each first cluster center respectively comprises:

obtaining a multidimensional data of each variable object according to the rule template data; and

calculating a distance from each variable object to each first cluster center respectively according to the multidimensional data of each variable object.

6. A device of constructing a decision model, comprising:

an extraction module configured to obtain a rule template data and extract each variable object and each template sample from the rule template data;

a cluster module configured to cluster and analyze the variable objects to obtain a clustering result;

a first feature module configured to match the clustering result with each template sample according to the rule template data, and serve the matched clustering result as a first feature;

a second feature module configured to calculate a black sample probability for each variable object and serve the black sample probability of each variable object as a second feature; and

a construction module configured to construct the decision model according to the first feature and the second feature.

7. The device of claim 6, wherein the device further comprises:

a mapping module configured to map each variable object to a predefined label according to a preset algorithm; and

a third feature module configured to match the label with each template sample according to the rule template data, and serve the matched label as a third feature;

the construction module is further configured to construct the decision model according to the first feature, the second feature, and the third feature.

8. The device of claim 7, wherein the construction module comprises:

an establishment unit configured to establish an original node;

an obtainment unit configured to obtain a result type of each template sample according to the rule template data;

a traversal unit configured to traverse and read the first feature, the second feature, and the third feature respectively to generate a reading record; and

a purity calculation unit configured to calculate a division purity of each reading record according to the result type of each template sample, and determine a division point according to the division purity;

wherein the establishment unit is further configured to obtain a feature corresponding to the division point, and establish a new node.

9. The device of claim 6, wherein the cluster module comprises:

a selection unit configured to select a plurality of variable objects randomly from the variable objects as a first cluster center of one cluster, wherein each first cluster center corresponding to one of the cluster;
a distance calculation unit configured to calculate a distance from each variable object to each first cluster center respectively;
a division unit configured to divide each variable object into a cluster corresponding to a first cluster center wherein the distance from the each variable object to the first cluster center is shortest;
a center calculation unit configured to calculate a second cluster center of each cluster respectively after dividing the variable objects; and
a determination unit configured to determine whether the distance between the first cluster center and the second cluster center in each cluster is less than a preset threshold value; and if yes, each cluster is output as the clustering result; or else, the first cluster center of the corresponding cluster is replaced with the second cluster center, and the distance calculation unit continues to calculate the distance from each variable object to each first cluster center respectively.

10. The device of claim 9, wherein the distance calculation unit comprises:

an obtainment subunit configured to obtain a multidimensional data of each variable object according to the rule template data; and
a calculation subunit configured to calculate a distance from each variable object to each first cluster center according to the multidimensional data of each variable object respectively.

11. A computer apparatus, comprising a processor and a memory storing computer executable instructions stored that, when executed by the processor, cause the processor to perform operations comprising:

obtaining a rule template data and extracting each variable object and each template sample from the rule template data;
clustering and analyze the variable objects to obtain a clustering result;
matching the clustering result with each template sample according to the rule template data, and serving the matched clustering result as a first feature;
calculating a black sample probability for each variable object and serving the black sample probability of each variable object as a second feature; and
constructing the decision model according to the first feature and the second feature.

12. The computer apparatus of claim 11, wherein after the step of calculating the black sample probability for each variable object and serving the black sample probability of each variable object as the second feature, the computer executable instructions, when executed by the processor, further cause the processor to perform operations comprising:

mapping each variable object to a predefined label according to a preset algorithm; and
matching the label with each template sample according to the rule template data, and serving the matched label as a third feature;
the constructing the decision model according to the first feature and the second feature comprises:
constructing the decision model according to the first feature, the second feature, and the third feature.

13. The computer apparatus of claim 12, wherein the constructing the decision model according to the first feature, the second feature, and the third feature comprises:

establishing an original node;
obtaining a result type of each template sample according to the rule template data;
traversing and reading the first feature, the second feature, and the third feature respectively to generate a reading record;
calculating a division purity of each reading record according to the result type of each template sample, and determining a division point according to the division purity; and
obtaining a feature corresponding to the division point, and establishing a new node.

14. The computer apparatus of claim 11, wherein the clustering and analyzing the variable objects to obtain the clustering result comprises:

selecting a plurality of variable objects randomly from the variable objects as a first cluster center of one cluster, wherein each first cluster center corresponding to one of the cluster;
calculating a distance from each variable object to each first cluster center respectively;
dividing each variable object according to the calculation result, and dividing each variable object into a cluster corresponding to a first cluster center wherein the distance from the each variable object to the first cluster center is shortest;
calculating a second cluster center of each cluster respectively after dividing the variable objects; and
determining whether the distance between the first cluster center and the second cluster center in each cluster is less than a preset threshold value; and if yes, outputting each cluster as the clustering result; or else, replacing the first cluster center of the corresponding cluster with the second cluster center, and continuing to calculate the distance from each variable object to each first cluster center respectively.

15. The computer apparatus of claim 14, wherein the calculating the distance from each variable object to each first cluster center respectively comprises:

obtaining a multidimensional data of each variable object according to the rule template data; and
calculating a distance from each variable object to each first cluster center according to the multidimensional data of each variable object respectively.

16. One or more storage apparatus storing computer executable instructions that, when executed by the one or more processors, cause the one or more processors to perform the steps of:

obtaining a rule template data and extracting each variable object and each template sample from the rule template data;
clustering and analyzing the variable objects to obtain a clustering result;
matching the clustering result with each template sample according to the rule template data, and serving the matched clustering result as a first feature;
calculating a black sample probability for each variable object and serving the black sample probability of each variable object as a second feature; and
constructing the decision model according to the first feature and the second feature.

17. The storage apparatus of claim 16, wherein the computer executable instructions, when executed by the one or more processors, further cause the one or more processors, after the step of calculating the black sample probability for each variable object and serving the black sample probability of each variable object as a second feature, to further perform operations the steps of:

mapping each variable object to a predefined label according to a preset algorithm; and
matching the label with each template sample according to the rule template data, and serving the matched label as a third feature;
the constructing the decision model according to the first feature and the second feature comprises:
constructing the decision model according to the first feature, the second feature, and the third feature.

18. The storage apparatus of claim 17, wherein the constructing the decision model according to the first feature, the second feature, and the third feature comprises:

establishing an original node;
obtaining a result type of each template sample according to the rule template data;
traversing and reading the first feature, the second feature, and the third feature respectively to generate a reading record;
calculating a division purity of each reading record according to the result type of each template sample, and determining a division point according to the division purity; and
obtaining a feature corresponding to the division point, and establishing a new node.

19. The storage apparatus of claim 16, wherein the clustering and analyzing the variable objects to obtain the clustering result comprises:

selecting a plurality of variable objects randomly from the variable objects as a first cluster center of one cluster, wherein each first cluster center corresponding to one of the cluster;

calculating a distance from each variable object to each first cluster center respectively;

dividing each variable object according to the calculation result, and dividing each variable object into a cluster corresponding to a first cluster center wherein the distance from the each variable object to the first cluster center is shortest;

calculating a second cluster center of each cluster respectively after dividing the variable objects; and

determining whether the distance between the first cluster center and the second cluster center in each cluster is less than a preset threshold value; and if yes, outputting each cluster as the clustering result; or else, replacing the first cluster center of the corresponding cluster with the second cluster center, and continuing to calculate the distance from each variable object to each first cluster center respectively.

20. The storage apparatus of claim 19, wherein the calculating the distance from each variable object to each first cluster center respectively comprises:

obtaining a multidimensional data of each variable object according to the rule template data; and

calculating a distance from each variable object to each first cluster center according to the multidimensional data of each variable object respectively.

processor

system bus

operating system

computer executable
instructions

non-transitory storage medium

network interface

random access memory

memory

computer device

Fig. 1

S210

obtaining a rule template data and extracting each variable object and each template sample in the rule template data

S220

clustering and analyzing the variable objects to obtain a clustering result

S230

matching the clustering result with each template sample according to the rule template data, and serving the matched clustering result as a first feature

S240

calculating a black sample probability for each variable object and serving the black sample probability of each variable object as a second feature

S250

constructing the decision model according to the first feature and the second feature

Fig. 2

S310

mapping each variable object to a predefined label according to a preset algorithm

S320

matching the label with each template sample according to the rule template data, and serving the matched label as a third feature

S330

constructing the decision model according to the first feature, the second feature, and the third feature

Fig. 3

S402

establishing an original node

S404

obtaining a result type of each template sample according to the rule template data

S406

traversing and reading the first feature, the second feature, and the third feature respectively to generate a reading record

S408

calculating a division purity of each reading record according to the result type of each template sample, and determining a division point according to the division purity

S410

obtaining a feature corresponding to the division point, and establishing a new node

S412

when the preset condition is met, stopping establishment of a new node, and completing construction of the decision tree

Fig. 4

S502

selecting a plurality of variable objects randomly from the variable objects as a first cluster center of one cluster

S504

calculating a distance from each variable object to each first cluster center respectively

S506

dividing each variable object into a cluster corresponding to a first cluster center wherein the distance from the each variable object to the first cluster center is shortest according to the calculation result

S508

calculating a second cluster center of each cluster after dividing the variable objects

S510

determining whether the distance between the first cluster center and the second cluster center in each cluster is less than a preset threshold value

yes

no

S512

replacing the first cluster center of the corresponding cluster with the second cluster center

S514

outputting each cluster as the clustering result

Fig. 5

device of constructing a decision model

| extraction module | cluster module | first feature module | second feature module | construction module |

610    620    630    640    650

Fig. 6

device of constructing a decision model

| extraction module | cluster module | first feature module | second feature module | construction module |

610    620    630    640    650

| mapping module | third feature module |

660    670

Fig. 7

650

construction module

652

establishment unit

654

obtainment unit

656

traversal unit

658

purity calculation unit

Fig. 8

620

cluster module

623

distance calculation unit

621

selection unit

obtainment subunit

910

calculation subunit

920

625

division unit

627

center calculation unit

629

determination unit

Fig. 9

# INTERNATIONAL SEARCH REPORT

| | International application No. |
|---|---|
| | **PCT/CN2017/083632** |

**A.   CLASSIFICATION OF SUBJECT MATTER**

G06F 17/30 (2006.01) i; G06Q 40/02 (2012.01) i

According to International Patent Classification (IPC) or to both national classification and IPC

**B.   FIELDS SEARCHED**

Minimum documentation searched (classification system followed by classification symbols)

G06F; G06Q

Documentation searched other than minimum documentation to the extent that such documents are included in the fields searched

Electronic data base consulted during the international search (name of data base and, where practicable, search terms used)

CNTXT; CNABS; DWPI: template; PING AN TECHNOLOGY; WU, Shuangshuang; XU, Liang; XIAO, Jing; rule, division, grouping, audit, examination, black, abnormal, negative sample, decision, cluster+, classif+, probabilit+, model?, chance?, sample+, negative

**C.   DOCUMENTS CONSIDERED TO BE RELEVANT**

| Category* | Citation of document, with indication, where appropriate, of the relevant passages | Relevant to claim No. |
|---|---|---|
| A | CN 105279382 A (CHENGDU SHULIAN YIKANG TECHNOLOGY CO., LTD.), 27 January 2016 (27.01.2016), description, pages 5-8 | 1-20 |
| A | CN 103795612 A (BEIJING 58 INFORMATION TECHNOLOGY CO., LTD.), 14 May 2014 (14.05.2014), the whole document | 1-20 |
| A | CN 103793484 A (BEIJING 58 INFORMATION TECHNOLOGY CO., LTD.), 14 May 2014 (14.05.2014), the whole document | 1-20 |
| PX | CN 106384282 A (PING AN TECHNOLOGY (SHENZHEN) CO., LTD.), 08 February 2017 (08.02.2017), claims 1-10, and description, pages 4-13 | 1-20 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 July 2017 (11.07.2017) | **03 August 2017 (03.08.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YI, Jian** Telephone No.: (86-10) **62089283** |

Form PCT/ISA/210 (second sheet) (July 2009)

## INTERNATIONAL SEARCH REPORT
Information on patent family members

International application No.

**PCT/CN2017/083632**

| Patent Documents referred in the Report | Publication Date | Patent Family | Publication Date |
|---|---|---|---|
| CN 105279382 A | 27 January 2016 | None | |
| CN 103795612 A | 14 May 2014 | None | |
| CN 103793484 A | 14 May 2014 | None | |
| CN 106384282 A | 08 February 2017 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2016104234360